# EUROPEAN PATENT APPLICATION

(11) **EP 4 759 264 A1**
(43) Date of publication of application: **17.06.2026**
(21) Application number: 24219483.5
(22) Date of filing: 12.12.2024
(51) Int. Cl.: A61C 17/22, A46B 13/02, A61C 17/32, A61H 23/02

(54) **PERSONAL CARE ATTACHMENT AND PERSONAL CARE DEVICE**

(71) Applicant: Braun GmbH, 61476 Kronberg im Taunus (DE)
(72) Inventor: SCHÄFER, Robert, 61476 Kronberg (DE); VETTER, Ingo, 61476 Kronberg (DE); SCHEELE, Jannik, 61476 Kronberg (DE); SCHAEFER, Norbert, 61476 Kronberg (DE); KÖTTING, Jens, 61476 Kronberg (DE)
(74) Representative: P&G Patent Germany

(57) **Abstract**

A personal care attachment for a personal care handle, the personal care attachment having an outer housing, a head unit having a head arranged for being driven into motion relative to the outer housing, in particular into an oscillatory motion, and a driver having a first end being coupled with the head and a second end arranged for being coupled with a drive shaft of the personal care handle, and a magnetic force unit having at least one first magnetically interacting element provided in fixed relationship with the outer housing and at least one second magnetically interacting element provided in fixed relationship with either the head or the driver, wherein the magnetic force unit is arranged to provide a force that biases the second end of the driver away from the head so that the head is in a maximum deflection state, in particular wherein the personal care attachment comprises a stopper that defines the maximum deflection state.

## Description

### FIELD OF THE INVENTION

The present application is concerned with a personal care attachment comprising an outer housing, a head unit having a head arranged for being driven into motion relative to the outer housing, in particular into an oscillatory motion, and a driver having a first end being coupled with the head and a second end arranged for being coupled with a drive shaft of a personal care handle. The application is also concerned with a personal care device comprising such a personal care attachment and a personal care handle.

### BACKGROUND OF THE INVENTION

It is generally known that a personal care handle can comprise a drive shaft that provides a linearly vibrating motion along a longitudinal axis of the drive shaft. The motion provided by the drive shaft can be used to drive a head of a personal care attachment into motion relative to an outer housing of the personal care attachment when the personal care attachment is attached to the personal care handle thereby forming a personal care device. To transfer the motion from the drive shaft to the head of the personal care attachment, a driver may be utilized that has a first end coupled with the head and a second end coupled with the drive shaft in the attached state. To assure that the driver and the drive shaft are not decoupled from each other during operation of the personal care device, a coupling arrangement may be provided such as a mechanical coupling or a magnetic coupling. The coupling force that needs to be overcome for a decoupling of the coupled driver and drive shaft may be set by the manufacturer.

Document EP 2 550 938 B1 describes a solution having a magnetic coupling, which is, e.g., utilized by the Oral-B iO electric toothbrush handles in combination with the Oral-B iO replacement brush heads.

It is an object to provide a personal care attachment and a personal care device where a coupling between a driver of the personal care attachment and a linearly vibrating drive shaft of a personal care handle can be established that is at least different to the generally known solutions.

### SUMMARY OF THE INVENTION

In accordance with at least one aspect, a personal care attachment for a personal care handle is provided, the personal care attachment comprising an outer housing, a head unit having a head arranged for being driven into motion relative to the outer housing, in particular into an oscillatory motion, and a driver having a first end being coupled with the head and a second end arranged for being coupled with a drive shaft of the personal care handle, and a magnetic force unit having at least one first magnetically interacting element provided in fixed relationship with the outer housing and at least one second magnetically interacting element provided in fixed relationship with either the head or the driver, wherein the magnetic force unit is arranged to provide a force that biases the second end of the driver away from the head so that the head is in a maximum deflection state, in particular wherein the personal care attachment comprises a stopper that defines the maximum deflection state.

In accordance with at least one aspect, a personal care device is provided that comprises a personal care attachment, in particular a personal care attachment as defined in the previous paragraph, and a personal care handle, the personal care attachment being attached to the personal care handle, the personal care handle comprising a drive shaft arranged for providing a linear vibratory motion along a longitudinal direction of the personal care handle, the personal care attachment comprising an outer housing, a head unit having a head arranged for being driven into motion relative to the outer housing, in particular where the motion is an oscillatory motion ranging from a first deflection angle to a second deflection angle, and a driver having a first end being coupled with the head and a second end coupled with the drive shaft of the personal care handle, and a magnetic force unit having at least one first magnetically interacting element provided in fixed relationship with the outer housing and at least one second magnetically interacting element provided in fixed relationship with either the head or the driver, wherein the magnetic force unit is arranged to provide a biasing force that pushes the second end of the driver towards the drive shaft independent from the deflection angle, in particular wherein the biasing force is at least 2 Newton.

### BRIEF DESCRIPTION OF THE DRAWINGS

The present disclosure will be further elucidated by a detailed description of example embodiments and with reference to figures. In the figures
- Fig. 1: is a depiction of an example personal care attachment realized as a replacement brush head arranged for attachment to a personal care handle realized as an electric toothbrush handle;
- Fig. 2: is a depiction of an example personal care device comprising a personal care attachment as shown in Fig. 1 and a personal care handle, the personal care device being realized as an electric toothbrush;
- Fig. 3A: is a cross sectional cut through a personal care attachment comprising an example magnetic force unit;
- Fig. 3B: is a cross sectional cut through the personal care attachment of Fig. 3A attached to a top portion of a personal care handle, where a second end of a driver of the personal care attachment is coupled with a drive shaft of the personal care handle;
- Fig. 3C: is a cross sectional cut through a head portion of a personal care attachment where the head is deflected into a maximum deflection state, which is defined by a mechanical stopper;
- Fig. 4: is a depiction of a first example magnetic force unit shown in isolation, the magnetic force unit comprising four magnetically interacting elements;
- Fig. 5: is a depiction of a second example magnetic force unit shown in isolation, the magnetic force unit comprising two magnetically interacting elements that face each other;
- Fig. 6: is a depiction of a third example magnetic force unit shown in isolation, the magnetic force unit comprising two magnetically interacting elements that are shaped so that one can partially immerse into the other;
- Fig. 7: is a depiction of a fourth example magnetic force unit shown in isolation, the magnetic force unit comprising two magnetically interacting elements that are shaped so that one can immerse into the other;
- Fig. 8: is a graph showing four biasing force characteristics relating to specific embodiments of the first to fourth examples;
- Fig. 9: is a depiction of a fifth example magnetic force unit shown in isolation, the magnetic force unit comprising two magnetically interacting elements that are provided as in axial direction overlapping and successively, i.e., on top of each other located annulus sectors;
- Fig. 10: is a depiction of a sixth example magnetic force unit shown in isolation, the magnetic force unit comprising two magnetically interacting elements that are arranged as in radial direction successively positioned annulus sectors;
- Fig. 11: is a depiction of a seventh example magnetic force unit shown in isolation, the magnetic force unit comprising four magnetically interacting elements that are arranged as two pairs of facing cuboids; and
- Fig. 12: is a graph showing three biasing force characteristics relating to the fifth to seventh examples.

### DETAILED DESCRIPTION OF THE INVENTION

In accordance with the present application, a personal care attachment comprises a head unit and an outer housing. The head unit comprises a movably mounted head that is mounted at the outer housing and that can be driven into a motion, specifically into a periodic motion such as an oscillatory rotational motion of the head. The head may be mounted on an axle extending along an axle direction and defining a rotation axis. The motion of the head then occurs around the axle, i.e., around the rotation axis. The head unit further comprises a driver that has a first end being coupled with the head and a second end intended for being coupled with a drive shaft of a personal care handle, specifically for being pushed against a top surface of the drive shaft. The driver is arranged for receiving a motion from the drive shaft in the attached state and for transferring the motion to the head.

In accordance with the present application, the personal care attachment further comprises a magnetic force unit that is arranged for applying a force on the driver so that the driver is biased away from the head, which means that the second end of the driver is in the attached state biased or pushed against the drive shaft of the personal care handle, e.g., against a top surface of the driver. In the unattached state, the driver including the second end of the driver is biased or pushed away from the head so that the head is biased into a maximum deflection state. A mechanical stopper may be provided that defines the maximum deflection state, i.e., a stopper against which a part of the head or of the driver abuts in the unattached state. The magnetic force unit may then still apply a biasing force in the maximum deflection state, even though it is not needed that a biasing force is still applied in the maximum deflection state. The maximum deflection state may be a deflection state that is not reached in operation when the personal care attachment is attached to the personal care handle. E.g., the head may in operation be deflected between -20 degrees and 20 degrees, where 0 degrees is defined to be a center position, and the maximum deflection state may be at -45 degrees.

For the purposes of the present application, it shall be understood that the "biasing force" is intended to move the second end of the driver relative to the outer housing towards a coupling end of the personal care attachment. While any force comes along with a counterforce, the force that biases the second end of the driver also acts onto the outer housing, but the outer housing is herein considered to be fixed in position, which is specifically the case in the attached state, when the outer housing is secured at the personal care handle, e.g., by mechanical fixation means. The biasing force will then push the second end of the driver towards the drive shaft and thus serves to maintain the contact between the second end of the driver and the drive shaft in operation.

The magnetic force unit comprises at least one first magnetically interacting element and at least one second magnetically interacting element, which first and second magnetically interacting elements are disposed relative to each other in close proximity, where the at least one first magnetically interacting element is disposed in fixed relationship with the outer housing and the at least one second magnetically interacting element is disposed in fixed relationship with the head unit, i.e., either in fixed relationship with the head or the driver. In operation, the first and second magnetically interacting elements are moved relatively to each other, leading to a periodically changing force that ideally always biases the second end of the driver away from the head, where "always" relates to the deflection angles into which the head can be moved in operation. While this is not to be understood as limiting, the angular range of deflection may be between -40 degrees and 40 degrees, where 0 degrees was chosen to be the center position. In particular, the range of deflection angles may be between -30 degrees and 30 degrees, further in particular in between -20 degrees and 20 degrees and even further in particular in between -10 degrees and 10 degrees. The angular width of the range of the deflection angle may thus be 80 degrees or 60 degrees or 40 degrees or 20 degrees or any other sensible value.

In operation, when the personal care attachment is attached to the personal care handle, the drive shaft being coupled with the driver periodically moves the driver between a first intended deflection state and a second intended deflection state. The head unit is arranged so that the driver's first and second intended deflection states translate into respective first and second intended deflection states of the head. E.g., in case the head is mounted on an axle, the first and second intended reflection states may correspond to certain angular positions as mentioned above and specifically may correspond to about -20 degrees in the first intended deflection state and about 20 degrees in the second intended deflection state. The angle is measured with respect to a rotation around the rotation axis, where 0 degrees is a center position. The first and second intended deflection states of the head may correspond to first and second intended deflection states of the driver along a longitudinal axis between about -1.0 mm and about 1.0 mm or between about -0.8 mm and about 0.8 mm or between -0.6 mm and 0.6 mm. The drive shaft applies a force onto the driver when it moves towards the head. When the drive shaft moves away from the head, the biasing force provided by the magnetic force unit shall maintain the contact between the second end of the driver and the drive shaft.

The term "close proximity" used above in relation to the location of the first and second magnetically interacting elements shall be understood to mean that the first and the second magnetically interacting elements have outer surfaces that are in a first intended deflection state not farther away from each other than about 5.0 mm, in particular about 4.0 mm, further in particular about 3.0 mm or about 2.5 mm or 2.0 mm or 1.5 mm etc. In operation, the magnets may then move closer towards each other. In embodiments where the first and the second intended deflection states are linearly disposed by about 2.0 mm, the maximum distance between the first and the second magnetically interacting elements may be set to about 2.5 mm and the minimum distance to about 0.5 mm. But these values shall not be construed as being limiting and other values may be chosen as well. Instead of being moved towards each other, the first and second magnetically interacting elements may be moved within each other, i.e., one of the first and second magnetically interacting elements may immerse at least partially into the other of the first and second magnetically interacting elements.

While the motion of the driver or the head will move the second magnetically interacting element relative to the first magnetically interacting element, it is not necessary that the force being applied by the magnetic force unit onto the second end of the driver monotonically increases with increasing deflection state, e.g., increases from about -1.0 mm to about 1.0 mm.

The magnetic force unit may be governed by two basic principles:
- The magnetic force unit is arranged to provide a biasing force that pushes the second end of the driver away from the head, i.e., towards and against the drive shaft of the personal care handle in the attached state, specifically towards and against a top surface of the drive shaft.
- The biasing force is always present, independent from the state of deflection of the head relative to the outer housing during operation.

In operation, the drive shaft of the personal care handle provides a linearly vibrating motion along a longitudinal axis of the drive shaft. In the attached state, the linear vibration is transferred to the driver of the personal care attachment and the driver then transfers this periodic motion to the head. The head may be mounted on an axle and may then be driven into an oscillatory rotation around the axle. In accordance with the present application, it is considered that the driver is coupled with the drive shaft via cooperating contact or coupling surfaces without any additional coupling means, even though it shall not be excluded that the driver is additionally mechanically or otherwise detachably coupled with the drive shaft. The magnetic force unit causes the coupling surface of the driver to become biased against the coupling surface of the drive shaft so that the coupling surface (or: contact surface) of the driver stays in contact with the coupling surface (or: contact surface) of the drive shaft. It shall also not be excluded that another force unit is present to provide an additional biasing force, e.g., a mechanical force unit comprising a mechanical spring may be present.

In case the driver would occasionally or periodically decouple from the drive shaft, this would on the one hand cause noise and on the other hand would cause a higher wear of the contact surfaces. Due to the periodic acceleration of the drive shaft, specifically when the drive shaft moves towards the personal care handle (i.e., away from the head), the biasing force should be strong enough so that the driver follows the downwards movement of the drive shaft without losing contact. The minimum biasing force to be applied at this maximum deflection of the head may be in a range of between 0.5 Newton and 15.0 Newton, in particular in a range of between 1.0 Newton and 10.0 Newton, further in particular in a range of between 1.5 Newton and 8.0 Newton, and even further in particular in a range of between 2.0 Newton and 6.0 Newton. The value that is needed is depending on various factors, specifically on the linear stroke length of the drive shaft and the frequency of the linear vibration and further on any friction between the driver and the head and the head and the axle, if such is present. Further, the masses of the various elements may play a role in determining the needed biasing force. A skilled person may compute the needed biasing force and the biasing force achieved by a specific magnetic force unit by means of a simplified computational approach or by using a complex simulation model.

Additionally, load on the head during use of the personal care device may apply a counterforce that reduces the biasing force and may thus cause unwanted decoupling of the driver and the drive shaft. To overcome such decoupling under load on the head, the biasing force applied at the maximum deflection and the biasing force as such may be increased over the biasing force that is needed to keep the driver and the drive shaft coupled with each other in an unloaded condition.

As will be discussed in more detail further below, the magnetic force unit may be realized as a "magnetic spring" where the biasing force monotonously increases from the first deflection angle to the second deflection angle. But - as will be seen - it is not necessary that the magnetic force unit shows a spring characteristic. In some examples, the biasing force may stay essentially constant within the deflection range. In some examples, the biasing force may have a maximum at a middle deflection state so that at some point the applied biasing force may become decreased even though the deflection increases.

The at least one first magnetically interacting element may be realized as a permanent magnet, e.g., a neodymium magnet (NdFeB magnet), the neodymium magnet in particular having a grade N48SH. The at least one second magnetically interacting element may be realized as a permanent magnet as well having optionally the same material specification as the first magnetically interacting element. The first and the second magnetically interacting elements may then be disposed with opposing magnetization direction, even though this is not necessary, and embodiments are considered where the magnetization direction of the first and second magnetically interacting elements is identical. It was found that some embodiments with opposing magnetization direction tend to create higher biasing forces than embodiments with identical magnetization direction. In some embodiments, one of the first or second magnetically interacting elements may be realized as a magnetizable element such as a soft (i.e., annealed) iron element. In case, e.g., the second magnetically interacting element is a magnetizable element, two first magnetically interacting elements realized as permanent magnets and respectively two second magnetically interacting elements realized as magnetizable elements may be used. The magnetic force created by a pair of magnetically interacting elements comprising a permanent magnet and a magnetizable element may not be as strong as the force achieved between two identically sized permanent magnets. While this shall not be understood as limiting, the first and second magnetically interacting elements may each have a size so that they fit into a cylinder having a diameter of 9.0 mm and a height of 6.0 mm, but to some extent the size and/or shape of the magnetically interacting elements may be governed by the available free volume in a personal care attachment.

The at least one second magnetically interacting element may be mounted at the driver, e.g., the second magnetically interacting element may comprise a bore through which the driver extends. The bore may in particular be a central bore. Alternatively, the second magnetically interacting element may be integrated into the driver, e.g., a first portion of the driver may be secured at a first end of the second magnetically interacting element, e.g., by gluing or welding, and a second portion of the driver may be secured at a second end of the second magnetically interacting element. The driver portions may comprise widened ends to support gluing or welding. But other connections are considered as well, e.g., a driver portion may be screwed to the second magnetically interacting element.

The first and/or second magnetically interacting element(s) may have an essentially cylindrical outer surface, but this shall not be understood as limiting as any geometric shape or free shape may be possible as long as the intended magnetic force is generated by the magnetic force unit.

In some embodiments, at least some of the first and/or second magnetically interacting element(s) may have a central bore, e.g., for accommodating the driver and/or the other one of the first or second magnetically interacting element(s). In connection with the latter, the first and second magnetically interacting elements may be dimensioned and disposed so that in operation one of the first or second magnetically interacting elements will at least partially immerge into a cut-out or bore or depression of the other of the first or second magnetically interacting elements. E.g., the first magnetically interacting element may have a (in particular central) bore, in particular a cylindrical bore, into which the second magnetically interacting element may at least partially immerse during operation. In some embodiments, one of the first or second magnetically interacting elements comprises a concave depression and the other of the first or second magnetically interacting elements comprises a convex projection that essentially is a negative of the concave depression. The depression and projection may be cone-shaped, which shall be understood as an example. Cones and cylinders may support a simpler manufacturing than other shapes.

In some examples, the driver may be guided by a mechanical guide, e.g., a linear guide, so that the driver and in particular the second end of the driver moves along a defined path, e.g., a linear path. Such a mechanical guide can avoid or at least reduce lateral movement of the driver due to, e.g., lateral forces caused by the magnetic force unit.

As was already indicated, the head may be mounted on an axle extending along an axle direction, the axle defining an axis, specifically a rotation axis for the head and the head may then be driven into motion around the axle, in particular the head may be driven into an oscillatory rotation around the axle, i.e., around the rotation axis.

Alternatively or additionally to being fixedly mounted at the driver or being integrated into the driver, the at least one second magnetically interacting element may be fixedly secured at or integrated into the head. In some embodiments, the second magnetically interacting element may be realized as an annulus sector having an inner radius, an outer radius, a radial thickness, a height and an angular extension or width. Herein, the terms "annulus sector" or "annular sector" or "annulus segment" or "annular segment" are understood to mean the same structure.

The first and/or the second magnetically interacting elements may comprise two identically sized portions having opposite magnetization direction. Without wanting to be limiting, the first and the second magnetically interacting elements may be arranged (a) successively in radial direction or (b) successively in axial direction. In these two different arrangements, the first and the second magnetically interacting elements may have different dimensions, specifically when they are arranged successively in radial direction as then one element needs to move 'inside' of the other element. In the following, the terms "inner magnetically interacting element" or "outer magnetically interacting element" may be used instead of first or second magnetically interacting element, but it shall be understood that then also a first and a second magnetically interacting element is present.

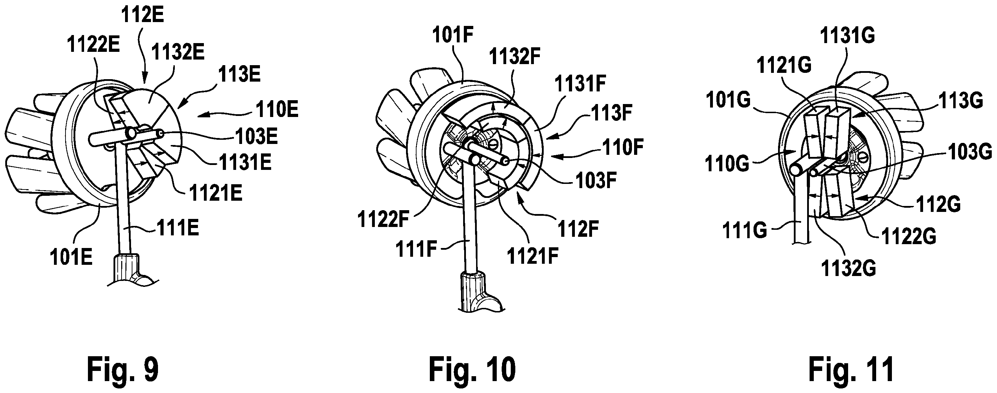

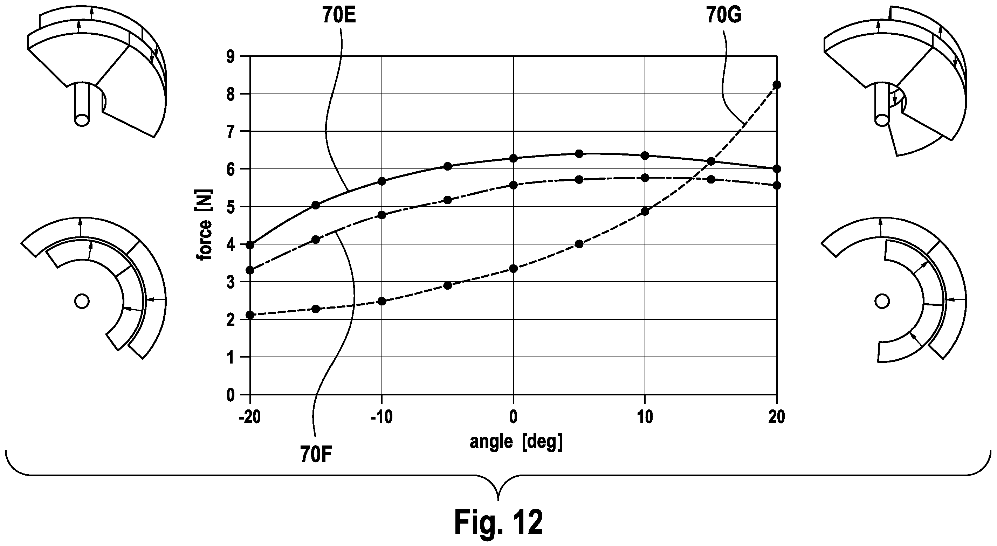

In embodiments in accordance with alternative (a) above, the first and the second magnetically interacting elements may have a radial thickness r and a height h. The inner positioned magnetically interacting element may have an inner radius of *ri₁* from the rotation axis and an outer radius of *rₒ₁,* and the outer positioned magnetically interacting element may have an inner radius *rᵢ₂* and an outer radius *rₒ₂.* They both may each have an angular extension or width of *D* degrees, where *D* may be 180 degrees in one example. Each of the magnetically interacting elements may comprise a first portion extending along *D*/*2* degrees having a first magnetization direction and a second portion extending along *D*/*2* degrees having a second magnetization direction that in particular is opposite to the magnetization direction of the first portion. The first and second magnetically interacting elements may be disposed with an air gap *gᵣ* in radial direction, where *gᵣ* may be in a range of between 0.05 mm and 1.0 mm. Example values will be given below. Assuming an oscillatory rotation of the head around the axle covering a 40 degrees angle (i.e., from -20 degrees with respect to a center position to 20 degrees), the first and second magnetically interacting elements may be disposed with a 10 degrees offset in the first intended deflection state of -20 degrees, which offset is then increased to 50 degrees for the second intended deflection state of 20 degrees. An embodiment of such an arrangement will be discussed further below with reference to Figs. 10 and 12. The radial thickness r may be in the range of between 0.5 mm to 5.0 mm, the height h may be in a range of between 0.5 mm to 10.0 mm, and the angular width D may be in a range of between 10 degrees to 360 degrees, where in the latter case the magnetically interacting element would be an annulus rather than an annulus sector. The inner radius *rᵢ₁* of the inner magnetically interacting element may be at least 0.5 mm and the outer radius *rₒ₂* of the outer magnetically interacting element may be not more than 40.0 mm, depending on the size of the personal care attachment and the needed return force that is created by the first and the second magnetically interacting elements.

In embodiments in accordance with alternative (b) above, the first and second magnetically interacting elements may each have a radial thickness r and a h, and they may be disposed with a gap *gₐ* in axial direction, where *gₐ* may be in a range of between 0.05 mm and 1.0 mm. Each of the first and second magnetically interacting elements may have an inner radius *ri₁* from the rotation axis and an outer radius *rₒ₁* resulting in the radial thickness r. Each of the first and second magnetically interacting elements may have an angular extension of *D* degrees and they may each comprise two identically shaped portions that each has an angular extension *of D*/*2* degrees. As described before, for a periodic 40 degrees deflection, the first and the second magnetically interacting elements may be disposed with a 10 degrees angular offset in circumferential direction for the first intended deflection state that is increased to a 50 degrees angular offset for the second intended deflection state. The angular offset may be in a range of between -80 degrees to 80 degrees. Again, each of the first and second magnetically interacting elements may comprise a first *D*/*2* degrees portion having a first magnetization direction and a second *D*/*2* degrees portion having a second magnetization direction that is in particular opposite to the first magnetization direction. The *D*/*2* degrees portion having the same magnetization direction may be stacked on top of each other in axial direction with the mentioned angular offset. These values are not to be understood as limiting. The same ranges as given above for embodiments in accordance with (a) are valid here as well.

In embodiments in accordance with (b) above, the first and second magnetically elements are arranged with overlap in the axial direction, in particular they may have the same radial dimensions such as inner radius and outer radius as was just described, which means that they are stacked on top of each other in the axial direction that is defined by the axle.

In some embodiments, the first and the second magnetically interacting elements may be realized as rectangular cuboids, where, e.g., each of the cuboids may have dimensions width times height times depth of 5 times 4 times 1.5 mm³. The cuboids may be disposed so that they face each other with their largest sides, which sides may be aligned with the axle so that the cuboids form a V-shaped arrangement so that the center line through the V crosses the rotation axis. In the -20 degrees position, they may be arranged with a 45 degrees angle that may be reduced to a 5 degrees angle for the 20 degrees position. In some embodiments, two pairs of magnetically interacting cuboids may be disposed opposite to each other with respect to the axle in a symmetric manner.

The personal care handle may comprise a resonant motor that is characterized by a spring constant and a mass and a respective resonance frequency. The resonant motor may be driven at a driving frequency at or close to the resonance frequency. E.g., the resonance frequency may lie in a range of between 80 Hz and 500 Hz, in particular in a range of between 100 Hz and 250 Hz and further in particular of between 120 Hz and 180 Hz, such as 145 Hz. The driving frequency may then be chosen to lie in a range of between -20 Hz and 20 Hz around the resonance frequency, in particular in a range of between -10 Hz and 10 Hz. In case that the magnetic force unit creates a biasing force that in dependency on the deflection angle of the head can be characterized by a spring constant, the driving frequency may be chosen to take into account the effect of the additional spring constant of the magnetic force unit on the resonance frequency of the resonant motor when the personal care attachment is attached to the personal care handle, thus forming a personal care device.

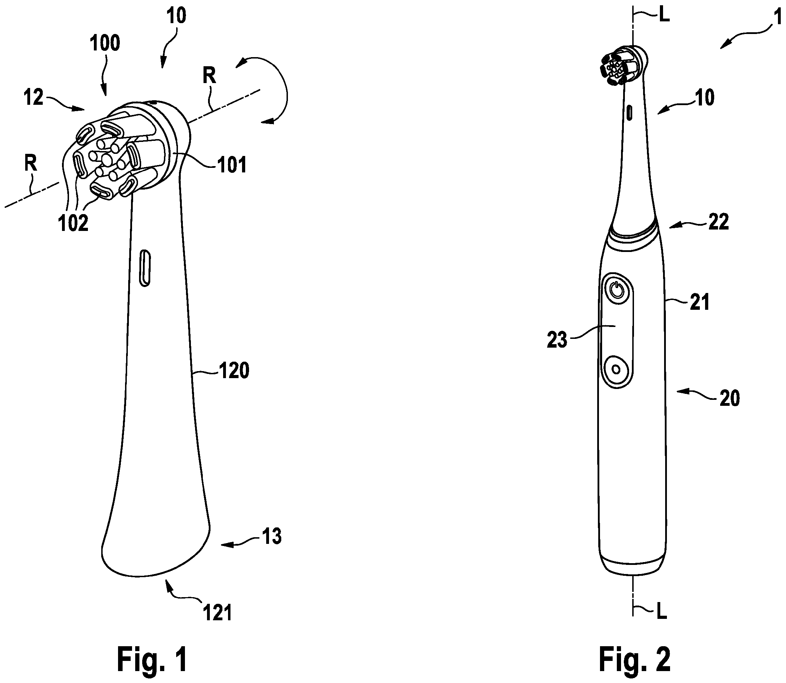

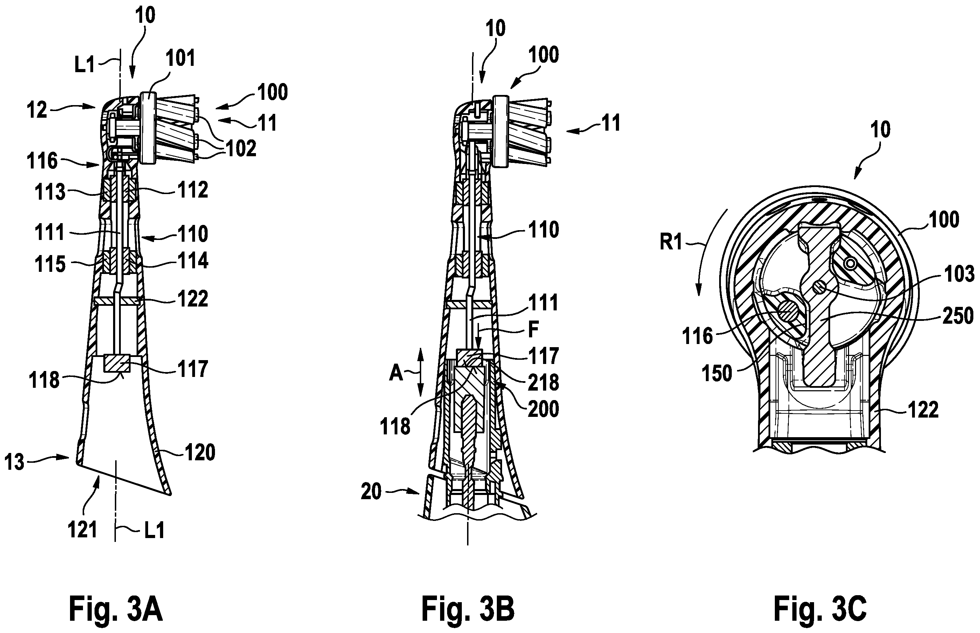

Fig. 1 is a depiction of an example personal care attachment 10 intended and arranged for detachable attachment to a personal care handle to form a personal care device. The personal care attachment 10 is here realized as a replacement brush head for an electric toothbrush. The personal care attachment 10 comprises an outer housing 120 and a head 100 mounted at the outer housing 120 for driven motion of the head 100 relative to the outer housing 120. The head 100 may be driven into an oscillatory rotation around a rotation axis R as is indicated by a double arrow. The head 100 has a carrier 101 and personal care elements 102 mounted on the carrier 101 for providing a personal care action. The head 100 is part of a head unit comprising a driver that extends inside of the outer housing 120. The personal care attachment 10 has a first end 12 and a second end 13. The head 100 is in the shown example mounted in proximity of the first end 12 and the second end 13 is here arranged as the attachment end for mechanical or other connection with the personal care handle. The outer housing 120 has an opening 121 at the second end 13 to allow access to an inner cavity defined by the outer housing 120. The mentioned driver of the head unit extends in this cavity and is intended and arranged for being coupled with a drive shaft of the personal care handle - see also Fig. 3B.

Fig. 2 is a depiction of a personal care device 1 comprising a personal care attachment 10 as described in connection with Fig. 1 and a personal care handle 20. The personal care handle 20 may comprise a resonant motor to drive a drive shaft of the personal care handle 20 into motion, specifically into a linear vibration along a longitudinal axis L of the personal care handle 20. The personal care handle 20 comprises an outer housing 21, an attachment end 22 intended and arranged for coupling with the personal care attachment 10 and may comprise a control interface 23 comprising at least one user-operable control element such as an on/off button and/or a mode switch etc.

Fig. 3A is a cross sectional cut through an example personal care attachment 10 comprising a head unit 11 and an example magnetic force unit 110. The head unit 11 has a head 100 and a driver 111. The head 100 comprises here a carrier 101 and personal care elements 102 mounted on the carrier 101 as was already explained. The driver 111 has a first end 116 that is coupled with the head 100 and a second end 117 that is intended and arranged for being coupled with a drive shaft of a personal care handle. The second end 117 is here shown to have a contact or coupling surface 118. The shape and dimension of the second end 117 as shown is not to be understood as limiting. The coupling surface 118 may in some examples be almost point-like even though it may reduce wear of the coupling components in case the coupling surface 118 has a flat area of, e.g., at least 1.0 mm².

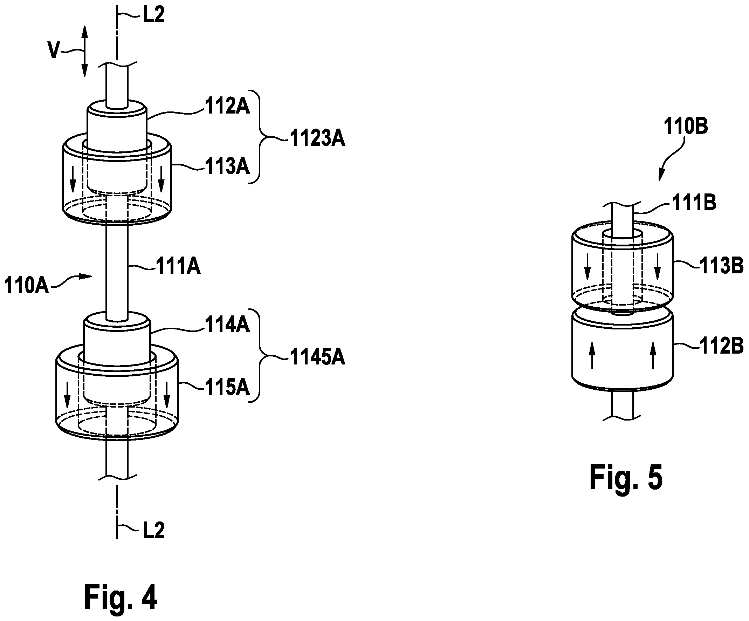

The example magnetic force unit 110 comprises four magnetically interacting elements 112, 113, 114 and 115, where a first pair of the magnetically interacting elements 112 and 113 is disposed such that they mainly interact with each other and a second pair of the magnetically interacting elements 114 and 115 is disposed so that they mainly interact with each other. Magnetically interacting elements 112 and 114 are generally referred to as two first magnetically interacting elements by convention and similarly, magnetically interacting elements 113 and 115 are referred to as two second magnetically interacting elements. The two first magnetically interacting elements 112 and 114 are disposed at a distance in a longitudinal extension direction L1 of the personal care attachment 10 and are mounted at or integrated into the driver 111 so that the two first magnetically interacting elements 112 and 114 move together with the driver 111. The two second magnetically interacting elements 113 and 115 are mounted at or integrated into the outer housing 120 with a distance in the longitudinal extension direction L1. More details of this example magnetic force unit are discussed with reference to Fig. 4 further below. In the shown example, the two second magnetically interacting elements 113 and 115 are shaped such that the respective first magnetically interacting element 112 or 114 can move into or through a bore or hollow of the respective magnetically interacting partner. I.e., first magnetically interacting element 112 is arranged for movement in a bore of the second magnetically interacting element 113 and first magnetically interacting element 114 is arranged for movement in a bore of the second magnetically interacting element 115, where the movement is a linear vibration along the longitudinal extension direction L1.

Fig. 3B is a cross sectional cut through the personal care attachment 10 of Fig. 3A attached to a personal care handle 20 (only a top portion of the personal care handle 20 is shown), where the second end 117 of the driver 111 of the personal care attachment 10 is coupled with a drive shaft 200 of the personal care handle 20. The drive shaft 200 has in the shown example a flat top surface 218 against which a coupling surface 118 of the second end 117 of the driver 111 is biased against by means of a biasing force F provided by the magnetic force unit 110 as will be explained in more detail in the following paragraphs. In operation, the drive shaft 200 vibrates linearly as is indicated by double arrow A. The magnetic force unit 110 is arranged to provide a biasing force F at least during a downwards motion of the drive shaft 200 and potentially also during a deceleration phase of the drive shaft 200 during an upwards motion. A downwards motion here means a motion of the drive shaft 200 towards the personal care handle 20 and an upwards motion means a motion of the drive shaft 200 towards the head 100 of the personal care attachment 10. As the motion of the drive shaft 200 is periodic, it comprises acceleration (increase of speed) and deceleration (decrease of speed) portions. In some examples, the magnetic force unit 110 always provides a biasing force with which the coupling surface 118 of the second end 117 of the driver 111 is pushed against the coupling surface 218 of the drive shaft 200, independent from the motion state of the drive shaft 200, i.e., independent from the deflection state of the head 100.

Fig. 3C is a cross sectional cut through a head portion of a personal care attachment 10 where the head 100 is deflected into a maximum deflection state, which is defined by a mechanical stopper 250. A magnetic force unit is understood to be present. The magnetic force unit biases the head 100 into a maximum deflection state. An abutting structure 150 provided at the head 100 may then abut against an abutting structure 250 provided with fixed relationship to the outer housing 122 of the personal care attachment 10. The head 100 was rotated in direction R1 by the biasing force created by the magnetic force unit around an axle 103 defining a rotation axis. The abutting structures 150 and 250 may be provided so that they agree with a maximum deflection state of the driver and thus stably define the maximum deflection state.

Fig. 4 is a depiction of a first example magnetic force unit 110A shown in isolation, the magnetic force unit 110A comprising four magnetically interacting elements 112A, 113A and 114A, 115A. The shown example magnetic force unit 110A essentially coincides with the magnetic force unit 110 shown in Figs. 3A and 3B. The magnetically interacting elements 112A and 113A form a first pair of magnetically interacting elements 1123A and the magnetically interacting elements 114A and 115A form a second pair of magnetically interacting elements 1145A. It shall be understood that the presence of two pairs of magnetically interacting elements 1123A and 1145A is just an example embodiment and example embodiments with only one pair or more than two pairs of magnetically interacting elements is considered as well, independent from the realization of the magnetically interacting elements.

The two pairs of magnetically interacting elements 1123A and 1145A each comprise an "inner" or first magnetically interacting element 112A and 114A, respectively, and an "outer" or second magnetically interacting element 113A and 115A, respectively. The inner magnetically elements 112A and 114A are both integrated into the driver 111A, and they are arranged successively with respect to a longitudinal extension axis L2 of the driver 111A.

The outer magnetically interacting element 113A has an inner bore or cavity that is sized and shaped such that the inner magnetically interacting element 112A can move inside this bore or cavity during the linear vibration motion V of the driver 111A and specifically can move inside this bore or cavity with only a small gap or distance, which may not exceed about 0.15 mm or may not exceed 0.2 mm or may not exceed 0.25 mm or may not exceed 0.3 mm or may not exceed 0.35 mm or may not exceed 0.5 mm or may not exceed 1.0 mm. In the shown example, the inner magnetically interacting element 112A has an outer cylindrical shape and the bore or cavity in the outer magnetically interacting element 113A has a respectively adapted inner cylindrical shape. In the shown example, also the outer magnetically interacting element 113A has an outer cylindrical shape. It shall be understood that these shapes are just meant as examples, and all other sensible shapes are considered as well. The shapes as shown may be referred to as "bushes".

In the shown example, the inner magnetically interacting elements 112A and 114A are realized as soft metal elements, e.g., made from steel, that can be magnetized when exposed to a magnetic field. The outer magnetically interacting elements 113A and 115A are in contrast realized as permanent magnets, e.g., as NdFeB magnets. This shall not be understood as limiting as the order may be changed, i.e., the inner magnetically interacting elements 112A and 114A may be realized as permanent magnets and the outer magnetically interacting elements 113A and 115A may be realized as magnetizable elements. In the shown example, the outer magnetically interacting elements 113A and 115A have a larger volume than the inner magnetically interacting elements 112A and 114A and it might thus be considered as sensible to realize them as permanent magnets.

By way of an example, sizes of the bushes shown in Fig. 4 are provided that may be considered, e.g., in case the personal care attachment is a replacement brush head or similarly sized attachment. In this example, the inner and outer magnetically interacting elements 112A, 113A, 114A and 115A are all realized as cylinders having a central bore and flat end faces. In this example it is assumed that the driver 111A extends through a central bore of the inner magnetically interacting elements 112A and 114A, respectively, where the driver 111A has a diameter of 1.6 mm. The inner magnetically interacting element 112A may then have an inner diameter of 1.6 mm so that it is securely fixed at the driver 111A by a positive fit or interference fit, an outer diameter of 4.2 mm and a height of 6.0 mm, the outer magnetically interacting element 113A may have an inner diameter of 4.8 mm, an outer diameter of 7.6 mm and a height of 5.0 mm, the inner magnetically interacting element 114A may have an inner diameter of 1.6 mm so that it is securely fixed at the driver 111A, an outer diameter of 4.8 mm and a height of 6.0 mm, and the outer magnetically interacting element may have an inner diameter of 5.4 mm, an outer diameter of 8.6 mm and a height of 5.0 mm. The distance between the outer magnetically interacting elements 113A and 115A may be 10 mm. The inner magnetically interacting elements 112A and 114A may start at a position where the lower ends of the inner magnetically interacting elements 112A and 114A are 0.25 mm outside of the lower ends of the outer magnetically interacting elements 113A and 115A, respectively, and may move to a position where the lower ends of the inner magnetically interacting elements 112A and 114A are 2.25 mm inside of the lower ends of the outer magnetically interacting elements 113A and 115A, respectively.

Fig. 5 is a depiction of a second example magnetic force unit 110B shown in isolation, the magnetic force unit 110B comprising a first and a second magnetically interacting element 112B and 113B that face each other. In the shown embodiment, the two magnetically interacting elements 112B and 113B are each realized as a permanent magnet and they have opposite magnetization direction as is indicated by magnetization arrows in Fig. 5. In the shown embodiment, the first magnetically interacting element 112B is part of or incorporated into a driver 111B. E.g., the first magnetically interacting element 112B may have a central bore through which the driver 111B extends. The first magnetically interacting element 112B may be held in place by friction (e.g., as a consequence of an interference fit or the like) or the first magnetically interacting element 112B may be fixed to the driver by welding or gluing or the like. The second magnetically interacting element 113B is understood to be fixedly attached at or with respect to an outer housing of a personal care attachment. In the shown embodiment, the first and second magnetically interacting elements 112B and 113B are realized as having a central bore. It shall be understood that the geometrical shape of the magnetically interacting elements 112B and 113B can be freely chosen by a skilled person, e.g., the cross-sectional shape may be hexagonal or triangular or the like. Similarly, a bore may have a hexagonal or triangular etc. cross-section.

By way of an example, sizes of the bushes shown in Fig. 5 are provided that may be considered, e.g., in case the personal care attachment is a replacement brush head or similarly sized attachment. In this example, the inner or first and the outer or second magnetically interacting elements 112B and 113B are both realized as cylinders having a central bore and flat face sides. In this example, it is assumed that the driver 111B extends through a central bore of the inner magnetically interacting element 112B, where the driver 111B has a diameter of 2.2 mm. The inner magnetically interacting element 112B may then have an inner diameter of 2.2 mm so it is fixed to the driver 111B, an outer diameter of 7.0 mm and a height of 5.0 mm. The outer magnetically interacting element 113B may have an inner diameter of 2.8 mm, an outer diameter of 7.0 mm and a height of 5.0 mm. The inner and outer magnetically interacting elements 112B and 113B may be disposed so that they have a distance of 2.5 mm at a deflection angle of -20 degrees and a distance of 0.5 mm at a deflection angle of 20 degrees.

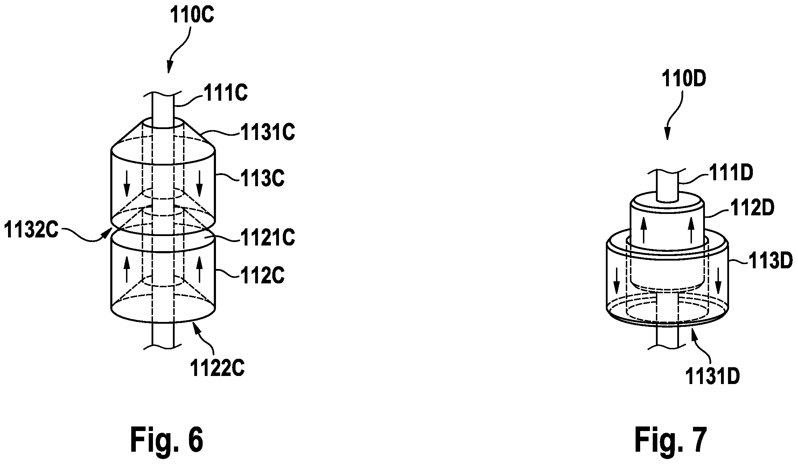

Fig. 6 is a depiction of a third example magnetic force unit 110C shown in isolation, the magnetic force unit 110C comprising a first and a second magnetically interacting element 112C and 113C that are shaped and are disposed so that one can repeatedly partially immerse into the other during operation. The first and second magnetically interacting elements 112C and 113C may be realized as permanent magnets with opposite magnetization as is indicated by respective magnetization arrows. In this example, the first and second magnetically interacting elements 112C and 113C are both realized as cylinders having a central bore and conical projections 1121C and 1131C on one side and conical depressions 1122C and 1132C on the opposite side, where the conical projection 1121C of the first magnetically interacting element 121C engages with the conical depression 1132C of the second magnetically interacting element 131C during operation, i.e., the conical projection 1121C partially immerges into the conical depression 1132C.

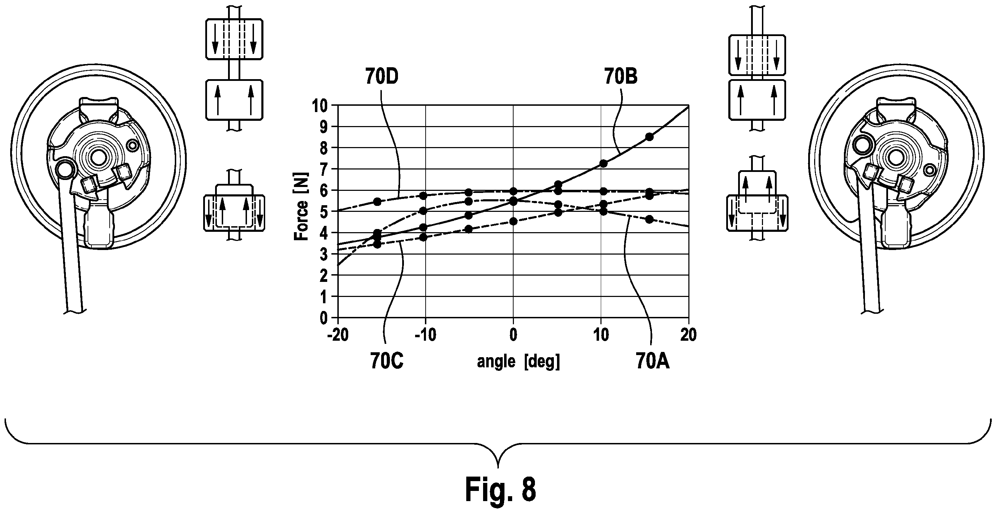

By way of an example, sizes of the first and second magnetically interacting elements 121C and 131C as shown in Fig. 6 are provided that may be considered, e.g., in case the personal care attachment is a replacement brush head or similarly sized attachment. In this example it is assumed that the driver 111C extends through a central bore of the first magnetically interacting element 112C, where the driver 111C has a diameter of 2.2 mm. The first magnetically interacting element 112C may then have an inner diameter of 2.2 mm, an outer diameter of 7.0 mm and a height of 5.0 mm, the second magnetically interacting element 113C may have an inner diameter of 2.8 mm, an outer diameter of 7.0 mm and a height of 5.0 mm. The conical depression 1132C is shaped and sized to be a negative of the conical projection 1121C and the conical projection 1121C can thus immerse into the conical depression 1132C during operation. The width of the conical depression or projection 1121C or 1132C is as wide as the cylinder is wide, i.e., 7.0 mm, and the height of the conical projection 1121C and the depth of the conical depression 1132C may be 2.0 mm. The first and second magnetically interacting elements 112C and 113C may be disposed relative to each other with a distance of 2.5 mm at a deflection angle of -20 degrees and at a distance of 0.5 mm at a deflection angle of 20 degrees. The conical depression and projection pairing tends to reduce the magnetic force differences between the two extreme deflection states as can be seen in Fig. 8.

Fig. 7 is a depiction of a fourth example magnetic force unit 110D shown in isolation, the magnetic force unit 110D comprising a first (or inner) magnetically interacting element 112D and a second (or outer) magnetically interacting element 113D that are shaped and disposed so that one can repeatedly immerse into the other during operation. The general structure of this example coincides with the first example, but in this fourth example, the first and second magnetically interacting elements 112D and 113D are realized as permanent magnets with opposite magnetization as is indicated by respective magnetization arrows. While it here is shown that the second magnetically interacting element 113D has a central bore or cut-out 1131D that is shaped and sized so that the first magnetically interacting element 112D can completely move through the bore or cutout 1131D, a partial cut-out may be provided that has a depth in longitudinal direction that is sufficient for the first magnetically interacting element 112D to partially immerse into the cut-out. This indicates that embodiments as shown in Figs. 6 and 7 may be considered as two examples following the same basic principle of magnetically interacting elements at least partially immersing into each other during operation.

By way of an example, sizes of the bushes shown in Fig. 7 are provided that may be considered, e.g., in case the personal care attachment is a replacement brush head or similarly sized attachment. In this example, the first/inner and second/outer magnetically interacting elements 112D and 113D are both realized as cylinders having a central bore and flat end faces. In this example it is assumed that the driver 111D extends through a central bore of the inner magnetically interacting element 112D, where the driver 111D has a diameter of 1.6 mm. The inner magnetically interacting element 112D may then have an inner diameter of 1.6 mm to become fixedly secured at the driver 111D by, e.g., friction forces, an outer diameter of 5.2 mm and a height of 6.0 mm, the outer magnetically interacting element 113D may have an inner diameter of 5.8 mm into which inner bore the inner magnetically interacting element 112D can immerse, an outer diameter of 8.6 mm and a height of 5.0 mm. The inner and outer magnetically interacting elements 112D and 113D may be disposed with respect with each other so that the inner magnetically interacting element 112D is immersed into the outer magnetically interacting element 113D so that the lower end face of the inner magnetically interacting element 112D has a distance of 0.5 mm to the lower end face of the outer magnetically interacting element 113D at a deflection angle of -20 degrees and a distance of 2.5 mm at a deflection angle of 20 degrees.

Fig. 8 is a depiction of four biasing force characteristics 70A, 70B, 70C and 70D of the first to fourth example magnetic force units 110A, 110B, 110C and 110D discussed above. The above provided example dimensions were used to determine the biasing force characteristic 70A to 70D. The permanent magnets were assumed to be realized as NdBeFe permanent magnets and in the first example, the magnetizable bushes were realized as soft iron elements.

For the biasing force characteristics 70A to 70D the computed biasing force in Newton, N, is plotted against the deflection angle of the head of the personal care device in degrees, deg, where the deflection angle is in the range of between -20 degrees to 20 degrees. On the right-hand side and on the left-hand side two examples magnetic force units are shown that indicate how the magnetically interacting elements are positioned to each other at -20 degrees and at 20 degrees, respectively. The two examples relate to the second example magnetic force unit 110B and the fourth example magnetic force unit 110D. Additionally, as the biasing force characteristics were determined for an example personal care attachment as shown in Fig 3A, i.e., a replacement toothbrush, it is also shown on the right-hand side that the deflection angle of -20 degrees coincides with a situation where the driver pulls the head by 20 degrees downwards from a center position in which the first end of the driver is on the same horizontal line as the axle on which the head is mounted. Similarly, for 20 degrees deflection angle, the driver is in an upwards position. The first biasing force characteristic 70A represents the first example magnetic force unit 110A, the second biasing force characteristic 70B represents the second example magnetic force unit 110B, the third biasing force characteristic 70C represents the third example magnetic force unit 110A, and the fourth biasing force characteristic 70D represents the fourth example magnetic force unit 110D.

For all force biasing force characteristics, 70A, 70B, 70C and 70D, the biasing force has a non-zero positive value within the shown range of the deflection angle between -20 degrees and 20 degrees. As was explained, the biasing force is supporting that the contacting surface of the second end of the driver stays in contact with the contacting surface of the drive shaft. While the drive shaft is pushing upwards, a contact between the contacting surface may be maintained by the pushing force of the drive shaft. In contrast, when the drive shaft moves downwards, the second end of the driver needs to be pushed downwards to maintain the contact.

As can be derived from Fig. 8, the biasing force does not necessarily have a spring characteristic, i.e., a monotonously increasing spring force in dependence on the deflection. E.g., biasing force characteristic 70A has a maximum force value at a middle deflection value and the force values decrease towards both ends of the range. In this context it is stated that it is relevant that the magnetic force unit always provides the needed biasing force. It is not needed that the biasing force increases with increasing deflection angle. Biasing force characteristic 70D shows a relatively constant force value over the complete deflection range, where biasing force characteristic 70B shows a relatively strong increase from -20 degrees to 20 degrees.

In Figs. 9 to 11, embodiments are shown where the first magnetically interacting elements are fixed to the head rather than to the driver, which first magnetically interacting elements interact with second magnetically interacting elements fixed at or with respect to an outer housing of the personal care attachment. In Fig. 9 and Fig. 10, each of the magnetically interacting elements is comprised of two sub-elements, but it shall be understood that this is not limiting and instead embodiments are contemplated with just one sub-element as shown in Figs. 5 to 7.

Fig. 9 is a is a depiction of a fifth example magnetic force unit 110E, the magnetic force unit 110E comprising a first and a second magnetically interacting element 112E and 113E that are arranged as annulus segments overlapping in axial direction. In this embodiment, the first magnetically interacting element 112E comprises a first sub-element 1121E and a second sub-element 1122E that are both realized as permanent magnets with opposite magnetization direction. The two sub-elements 1121E and 1122E are equally sized and are arranged in a gap-free manner in circumferential succession. Further, the second magnetically interacting element 113E comprises a first sub-element 1131E and a second sub-element 1132E that are both realized as permanent magnets with opposite magnetization direction. The two sub-elements 1131E and 1132E are equally sized and are arranged in a gap-free manner in circumferential succession. The annulus segments overlap in axial direction, i.e., they are arranged on top of each other in axial direction. The first and the second magnetically interacting elements 112E and 113E have the same outer dimensions and may be circumferentially offset from each other in the position relating to minimum deflection angle, e.g., -20 degrees, and may then move circumferentially against each other until a maximum deflection, e.g., 20 degrees. The first magnetically interacting element or annulus segment 112E is fixed at or with respect to a head 101E. The second magnetically interacting element 113E is fixed at or with respect to an outer housing of the personal care attachment. The head 101E is mounted on an axle 103E that defines a rotation axis for a motion, specifically an oscillatory rotation of the head induced by a driver 111E.

By way of an example, sizes of the annulus segments shown in Fig. 9 are provided that may be considered, e.g., in case the personal care attachment is a replacement brush head or similarly sized attachment. In this example, the first and second magnetically interacting elements 112E and 113E are both realized as annulus segments of identical dimensions. Each of the annulus segments 112E and 113E may then have a circumferential extension of 80 degrees and each sub-element 1121E, 1122E, 1131E and 1132E than has a circumferential extension of 40 degrees. Each of the annulus segments 112E and 113E may have a thickness of 2.0 mm in axial direction. The inner radius of the annulus segments 112E and 113E may be 1.5 mm and the outer radius 4.1 mm. The annulus segments 112E and 113E may be coaxially arranged with respect to the axle 103E of the head 101E, the axle 103E defining a rotation axis for the motion of the head 101E. At a deflection angle of -20 degrees, the first magnetically interacting element 112E may have a circumferential offset of 10 degrees in clockwise direction and may be moved to a circumferential offset of 50 degrees in clockwise direction with respect to the second magnetically interacting element 113E.

Fig. 10 is a is a depiction of a sixth example magnetic force unit 110F shown in isolation, the magnetic force unit 110F comprising a first/inner and a second/outer magnetically interacting element 112F and 113F that are realized as annulus segments. Here, the outer magnetically interacting element 113F and the inner magnetically element 112F are successively arranged in radial direction so that the inner and the outer magnetically interacting elements 112F and 113F are coaxial, where the axis around which the inner and outer magnetically interacting elements 112F and 113F oscillate in operation is defined by an axle 103F around which a head 101F oscillates. In the shown embodiment, the inner magnetically interacting element 112F is secured at or with respect to the head 101F and the outer magnetically interacting element 113F is secure at or with respect to an outer housing. In this embodiment, the inner magnetically interacting element 112F comprises a first sub-element 1121F and a second sub-element 1122F that are both realized as permanent magnets with opposite magnetization direction. The two sub-elements 1121F and 1122F are equally sized and are arranged in a gap-free manner in circumferential succession. Further, the outer magnetically interacting element 113F comprises a first sub-element 1131F and a second sub-element 1132F that are both realized as permanent magnets with opposite magnetization direction. The two sub-elements 1131F and 1132F are equally sized and are arranged in a gap-free manner in circumferential succession.

By way of an example, sizes of the annulus segments shown in Fig. 10 are provided that may be considered, e.g., in case the personal care attachment is a replacement brush head or similarly sized attachment. In this example, the inner and outer magnetically interacting elements 112F and 113F are both realized as annulus segments having the same angular or circumferential extension and the same radial thickness, while the inner magnetically interacting element 112F is sized so that it can oscillate within the outer magnetically interacting element 113F. Each of the annulus segments 112F and 113F may then have an angular extension or circumferential length of 90 degrees and each sub-element 1121F, 1122F, 1131F and 1132F may then have a circumferential length of 45 degrees. Each of the annulus segments 112F and 113F may have a thickness of 1.5 mm. The inner radius of the first/inner magnetically interacting element 112F may be 3.3 mm and the outer radius 4.8 mm. The inner radius of the second/outer magnetically interacting element 113F may be 5.0 mm and the outer radius 6.5 mm. The inner and the outer magnetically interacting elements 112F and 113F may be arranged with a distance or gap of 0.2 mm in radial direction. At a deflection angle of -20 degrees, the inner magnetically interacting element 112F may have a circumferential offset of 10 degrees in clockwise direction and may be moved to a circumferential offset of 50 degrees in clockwise direction with respect to the outer magnetically interacting element 113E at a deflection angle of 20 degrees.

Fig. 11 is a is a depiction of a seventh example magnetic force unit 110G shown in isolation, the magnetic force unit 110G comprises four magnetically interacting elements that are arranged as two pairs of magnetically interacting elements 112G and 113G. Each of the two pairs comprises two cuboids, i.e., the first pair 112G comprises sub-elements 1121G and 1122G and the second pair 113G comprises sub-elements 1131G and 1132G where each sub-element 1121G, 1122G, 1131G and 1132G is arranged as a cuboid. The two sub-elements 1121G and 1122G have the same magnetization direction and the sub-elements 1131G and 1132G have as well the same magnetization direction that is opposite to the magnetization direction of sub-elements 1121G und 1122G. The sub-elements 1121G and 1131G face each other and the sub-elements 1122G and 1132G face each other. At -20 degrees deflection angle, the sub-elements 1121G and 1131G may be provided in a V-type arrangement with a 5 degrees circumferential distance and the middle line between the two sub-elements 1121G and 1131G may cross a center of an axle 103G around which a head 101G oscillates in operation. At 20 degrees deflection angle the V-type arrangement may have a circumferential distance of 45 degrees.

By way of an example, sizes of the cuboids 1121G, 1122G, 1131G and 1132G shown in Fig. 11 are provided that may be considered, e.g., in case the personal care attachment is a replacement brush head or similarly sized attachment. In this example, each cuboid 1121G, 1122G, 1131G and 1132G may have a length of 5.0 mm, a height of 4.0 mm and a thickness of 1.5 mm. At -20 degrees deflection angle, the sub-elements 1122G and 1132G may be arranged with a 5 degrees circumferential distance and the middle line between the two sub-elements 1122G and 1132G may cross the center of an axle 103G. The sub-elements 1121G and 1131G and the two sub-elements 1122G and 1132G may each be moved to a angular distance of 45 degrees at a deflection angle of 20 degrees.

Fig. 12 is a depiction of three biasing force characteristics 70E, 70F and 70G of the fifth to seventh example magnetic force units discussed above. The above provided example dimensions were used to determine the biasing force characteristic 70E to 70G. The permanent magnets were assumed to be realized as NdBeFe permanent magnets.

For the biasing force characteristics 70E to 70G the computed biasing force in Newton, N, is plotted against the deflection angle of the head of the personal care device in degrees, deg, where the deflection angle is in the range of between -20 degrees to 20 degrees. On the right-hand side and on the left-hand side two examples are shown that indicate how the magnetically interacting elements are positioned to each other at -20 degrees and at 20 degrees, respectively. The two examples relate to the fifth example magnetic force unit 110E and the sixth example magnetic force unit 110F. The first biasing force characteristic 70E represents the fifth example magnetic force unit 110E, the second biasing force characteristic 70F represents the sixth example magnetic force unit 110F, and the third biasing force characteristic 70G represents the seventh example magnetic force unit 110G.

For all three biasing force characteristics 70E, 70F and 70G, the biasing force has a non-zero positive value within the shown range of the deflection angle between -20 degrees and 20 degrees. For the general explanations it is referred to the description relating to Fig. 8.

As can be derived from Fig. 12, the biasing force does not necessarily have a spring characteristic, i.e., a monotonously increasing spring force in dependence on the deflection. E.g., biasing force characteristic 70E has a maximum force value at around 5 degrees deflection angle and the force values decrease towards both ends of the range.

In a magnetic force unit as proposed herein, two or more variants of example arrangements as discussed herein may be combined, e.g. the examples of Fig. 5 and Fig. 10 may be combined to increase the overall biasing force.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A personal care attachment for a personal care handle, the personal care attachment comprising:
an outer housing;
a head unit having:
a head arranged for being driven into motion relative to the outer housing, in particular into an oscillatory motion, and
a driver having a first end being coupled with the head and a second end arranged for being coupled with a drive shaft of the personal care handle; and
a magnetic force unit having at least one first magnetically interacting element provided in fixed relationship with the outer housing and at least one second magnetically interacting element provided in fixed relationship with either the head or the driver, wherein the magnetic force unit is arranged to provide a force that biases the second end of the driver away from the head so that the head is in a maximum deflection state, in particular wherein the personal care attachment comprises a stopper that defines the maximum deflection state.

2. The personal care attachment in accordance with claim 1, wherein the first magnetically interacting element is a permanent magnet and the second magnetically interacting element is a permanent magnet.

3. The personal care attachment in accordance with claim 1, wherein either the first magnetically interacting element or the second magnetically interacting element is a magnetizable element, in particular a soft magnetic element, and the other one of the first and second magnetically interacting elements is a permanent magnet.

4. The personal care attachment in accordance with one of claims 1 to 3, wherein the driver comprises the at least one second magnetically interacting element so that the second magnetically interacting element moves in operation together with the driver, in particular wherein the second magnetically interacting element has a cut-out through which the driver extends, further in particular wherein the second magnetically interacting element has an essentially cylindrical outer surface.

5. The personal care attachment in accordance with claim 4, the first magnetically interacting element having a cut-out through which the driver extends, in particular wherein the first magnetically interacting element is an essentially cylindrical element.

6. The personal care attachment in accordance with claim 5, wherein the cut-out of the first magnetically interacting element is dimensioned and shaped and additionally the distance between the first and the second magnetically interacting elements is chosen so that during operation at least a portion of the second magnetically interacting element repeatedly immerges into the cut-out of the first magnetically interacting element.

7. The personal care attachment in accordance with claim 6, wherein one of the first or second magnetically interacting elements comprises a depression and the other one of the first or second magnetically interacting element has a projection that essentially is a negative of the concave depression so that the projection at least partially immerges into the depression during operation.

8. The personal care attachment in accordance with one of claims 1 to 7, further comprising a guide for mechanically guiding the driver.

9. The personal care attachment in accordance with one of claims 1 to 8, wherein the head is mounted on an axle extending along an axle direction and the head is arranged for being driven into motion, in particular oscillatory rotation, around the axle.

10. The personal care attachment in accordance with claim 9, wherein the at least one first magnetically interacting element is realized as a first annulus sector that has a first inner radius and a first outer radius, a first height and a first angular extension, in particular wherein the first annulus sector has at least two differently magnetized portions, the at least one second magnetically interacting element is realized as a second annulus sector that has a second inner radius and a second outer radius, a second height and a second angular extension, in particular wherein the second annulus sector has at least two differently magnetized portions, the first annulus sector and the second annulus sector are both being disposed so that the axle lies in the centers of the first annulus sector and of the second annulus sector and the first and the second heights are measured in the axle direction.

11. The personal care attachment in accordance with claim 10, wherein the first annulus sector and the second annulus sector are arranged sequentially in a radial direction and at least partially overlap in the radial direction.

12. The personal care attachment in accordance with claim 10, wherein the first annulus sector and the second annulus sector are sequentially arranged in the axle direction and at least partially overlap in the axle direction.

13. The personal care attachment in accordance with claim 9, wherein the first magnetically interacting element is a rectangular cuboid and the second magnetically interacting element is a rectangular cuboid that are disposed in a V-arrangement so that a middle line through the V crosses the axle.

14. A personal care device comprising a personal care attachment, in particular in accordance with any one of claims 1 to 13, and a personal care handle, the personal care attachment being attached to the personal care handle;
the personal care handle comprising a drive shaft arranged for providing a linear vibratory motion along a longitudinal direction of the personal care handle;
the personal care attachment comprising:
an outer housing;
a head unit having:
a head arranged for being driven into motion relative to the outer housing, in particular where the motion is an oscillatory motion ranging from a first deflection angle to a second deflection angle, and
a driver having a first end being coupled with the head and a second end coupled with the drive shaft of the personal care handle; and
a magnetic force unit having at least one first magnetically interacting element provided in fixed relationship with the outer housing and at least one second magnetically interacting element provided in fixed relationship with either the head or the driver, wherein the magnetic force unit is arranged to provide a biasing force that pushes the second end of the driver towards the drive shaft independent from the deflection angle, in particular wherein the biasing force is at least 2 Newton.

15. The personal care device in accordance with the previous claim, where the personal care handle comprises a resonant motor **characterized by** a spring constant and a mass, the resonant motor being driven with a periodic drive signal having a frequency at or in proximity to a resonance of the resonant motor, where a spring constant of the magnetic force unit of the personal care attachment is taken into account in the determination of the resonance frequency.
